# EUROPEAN PATENT SPECIFICATION

(11) **EP 1 602 696 B1**
(45) Date of publication and mention of the grant of the patent: **02.07.2008**
(21) Application number: 04102508.1
(22) Date of filing: 03.06.2004
(51) Int. Cl.: C09D 11/06, C09D 11/02

(54) **Non-fluting heatset ink composition**
Nichtwellende hitzehärtende Tintenzusammensetzung
Composition d'encre thermodurcissable non-ondulante

(43) Date of publication of application: 07.12.2005
(73) Proprietor: Sun Chemical B.V. (NL), 1382 LV Weesp (NL)
(72) Inventor: Thüring, Martin, Dr., 63791 Karlstein (DE)
(74) Representative: Fuchs

(56) References cited:
- EP-A- 1 333 073
- US-A- 4 357 164
- US-A- 5 153 069
- US-A- 5 352 729
- US-A- 5 713 990
- US-A- 5 965 633

## Description

The present invention relates to a new, advantageous use of a solvent having a boiling point of from 200°C to 240°C in an ink composition to avoid fluting by water.

During a heatset printing process, printing ink is dried in high-temperature ovens. In an early stage of the drying process of the printing process, moisture contained in the coated paper evaporates rapidly from a non-imaged area, resulting a large shrinkage in the cross direction of the coated paper in the non-imaged area. On the contrary, moisture of the coated paper lying under an imaged area evaporates slowly because a printed ink layer on the coated paper acts as heat transfer and moisture evaporation barrier, resulting a small shrinkage in the cross direction of the coated paper in the imaged area. As a result, the non-imaged area of the coated paper compresses the adjoining imaged area in the cross direction during the drying process, leading to the buckling of the imaged area.

This phenomenon is known as "fluting" and it appears during heatset printing, in particular during heatset web offset printing, and causes various defects and customer complaints, such as fibre fracture, waviness and also electrostatic cling.

The problem is paper related and occurs due to the structure of the wood fibres that are forming the backbone of the paper web. Wood is an inhomogeneous compound of different fibres. These structures are stabilised by chemical bonds. Between those fibres water molecules are present that act as spacers, keeping the fibres apart and hence ensuring the dimension stability of the paper web. During the printing process, the fibres pick up more water and swell. In the hot air floatation dryer besides the ink, also the paper is dried. The water molecules between the fibres evaporate, now allowing the fibres to come into close contact to each other. The paper web shrinks. New chemical bonds are formed between those fibres. The dimensions of the paper are altered this way. Since after the printing process, there are areas of different water content on the paper web (i.e. water content in the image and non image areas) this altering of the web's dimensions is in some areas more severe than in other adjacent areas. Due to the different swelling and shrinking extent of the fibres in these areas with different water content, waves form on the paper. Those newly created chemical bonds are so strong, that they will not completely be broken again after a re-moistening process.

In other words, for purposes of the invention, the term "fluting" is defined as undulating creases, waves or bands that form in the printed paper after it has gone through a heatset dryer. The series of corrugations appear in line with the direction of web travel that are produced on press, which are, as mentioned before, more or less permanent, i.e. do not relax until months after the product has been delivered.

There have been many efforts made to overcome the problem of fluting during heatset printing.

According to the prior art, new paper products are suggested, as for example described in Jpn Tappi J., (2003) vol. 57, no. 1, Jan. 2003, pp 92-97. There are papers described launched by Oji Paper which does not cause fluting in web offset printing. It is stated that contractile forces resulting from drying after web offset printing are minimised. However, the use such paper causes higher costs and in some applications the publishers as well as the printer are limited in paper choice.

Also, coatings are suggested in the art to avoid fluting. In Tappi J., (2000) vol. 83, no. 4, Apr. 2000, p. 84 it is described that the tendency to flute is largely determined by the coating formulation, with less absorbent coatings leading to less fluting.

During the 2002 (69th) Pulp and paper research conference, Tokyo, Japan, 17-18 June 2002 and the respective report (P-06, pp 166-171 [Tokyo, Japan: Japan TAPPI, 2002, 186pp]) it is described that high drying temperatures (135 °C) prevented flute formation during offset printing and cleaning processes. The drying conditions in early stage of the printing process are described to be important in the prevention if fluting.

Still further, there are remoisteners on the market to alleviate fluting, however, do not give reproducible results.

According to J. Pulp Pap. Sci., (Sept. 1993) Vol. 19, no. 5, J214-219, the results of theoretical and experimental analyses are presented, directed to suggestions for alleviating fluting through changes in dryer design and operation.

US 6,250,220 relates to a system and method of eliminating wrinkling, tearing and web-breaks of a web in an offset printing press as the web contacts the chill rollers on start-up. The system operates to eliminate the wrinkling that generates the tearing. During start-up, a spreader roller impinges the web, stretching out wrinkles. During acceleration of the press, when thermal contraction of the paper also achieves the desired stretching, the spreader roller is retracted to prevent smearing of ink on the web. Uneven pressure of the spreader is utilized to implement steering of the web to enhance web centering.

US 6,058,844 refers to a method of and apparatus for minimizing the problem of "fluting" or "corrugating" occurring in printed webs of light weight coated paper printed on both sides with thermosetting ink on heat-set web-offset printing presses resides in spreading the web in its width-wise direction as the printed web exits from the ink drying and heat setting oven of the press and passes over the web cooling chill rolls downstream from the oven, thereby to hold the printed web in a flat and smooth condition until it is cooled and the ink has taken a permanent set. Spreading the web prior to and during cooling allows the inks to thermoset in a flat state because the web is kept flat and free of flutes during thermosetting of the inks. The method and apparatus facilitate operation of the press at higher speeds and with lighter grades of paper than conventional, and provide for increased production efficiencies, lower costs, enhanced print quality, and access to new markets for web-offset printing.

Also, ink compositions for heatset offset printing with improved drying properties are described in the prior art:

US 5,713,990 and US 5,875,720 describe ink compositions comprising high boiling oils as solvents in the printing ink vehicles. Also, the bodied tung oil described as solvent in US 6,206,960, which is present in the ink composition decomposes only at temperatures greater than 350°C. The drying temperatures suggested during the printing process described in US 6,206,960 are as high as 149 °C. US 6,709,503 discloses modified linseed oil as solvent in ink compositions, which solvent decomposes only at temperatures greater than 350°C. The drying temperatures during the printing process are described to be high. US 4,327,011 speaks about saving energy during the drying process by decreasing the web temperature. It is explained that usual drying temperatures of from 121-127 °C can be decreased by 28-35%, i.e. to about 80°C. These temperatures are described to be exceptional low. US 5,427,615 speaks about fatty acid ester solvents with high flash points, decomposing only at temperatures above 350°C. US 5,552,467 describes a heatset web offset printing process and ink with making use of high drying temperatures 100 to 180 °C.

From the various different approaches described in the art for reducing or avoiding fluting during heatset printing it becomes apparent that there exists a strong need for improving ink properties for gaining better print quality by reducing waviness or fluting. It is therefore an object of the present invention to provide an ink composition and respective varnishes with superior quality with regard to the "fluting problem" occurring during heatset printing, in particular heatset web offset printing.

It has now surprisingly been found that using a solvent having a boiling point of 200°C to 240°C in an ink composition solves the problem of fluting.The present invention refers to the use of ink compositions, varnishes and respective low boiling solvents as set out in the claims. The heatset ink compositions and the varnishes of the present invention comprise a low boiling solvent having a boiling point of from 200°C to 240°C which is present within the formulations in an amount suited to allow the ink composition to dry at printed web temperatures of from 40°C to 60°C during the printing process to avoid fluting.

The invention further refers to the use of a non-fluting heatset ink composition composition comprising up to 45 % by weight of a pigment or pigment paste, greater than 40% by weight of a binder, greater than 10% by weight of one or more solvents, with greater than 1 % by weight of at least one solvent having a boiling point of from 200°C to 240°C, and optionally further additives, which ink composition dries at printed web temperatures of from 40°C to 60°C during the printing process.

Preferred amounts of low boiling solvents usable within the compositions of the invention are greater than 1% by weight (based on a final ink composition), more preferred greater than 5% by weight (based on a final ink composition) and in particular of from 10 to 40 % by weight (based on a final ink composition).

During the printing process making use of the new ink compositions in accordance with the invention, it is desirable that the paper humidity is kept at about 3% while the maximum temperature the web is exposed to in the dryer oven is preferably maintained below the temperature the web starts to loose more than its initial water content. That is, the ink composition according to the present invention already dries at printed web temperatures which are as low as from 40°C to 60°C, preferably 45°C to 55°C, most preferred at a temperature of 50 °C.

With such low drying temperatures a more rapid rate of solvent evaporation is expected to occur also occurs in the ink feed train of the press, which effect surprisingly does not appear upon use of the the new ink composition according to the present invention.

Still further, due to the low drying temperatures the ink compositions of the present invention allow saving energy during the heatset printing process. The printing process can be a heatset web offset process.

The printing process carried out with the ink composition according to the invention runs stable and the final product has a similar gloss as compared to products resulting from making use of standard inks. The same applies to the density of the final printed product.

The new non-fluting ink composition for heatset printing, in particular heatset web offset printing, preferably comprises greater than 40% by weight of a binder, greater than 10% by weight of one or more solvents, with greater than 1% by weight of at least one solvent having a boiling point of from 200°C to 240°C, and optionally further additives. As pigments useful in the ink composition dry pigments as well as pigment pastes and flush pigments are suited.

In a particular preferred embodiement of the present invention the non-fluting ink composition for heatset printing comprises 5 to 45 % by weight of a pigment or pigment paste, 40 to 80 % by weight of a binder, 10 to 40 % by weight of one or more solvents, and optionally further additives, wherein at least one solvent has a boiling point of from 200°C to 240°C and is present within the formulation in an amount of at least 1 % by weight, preferably 5 % by weight, which ink composition dries at printed web temperatures of from 40°C to 60°C during the printing process. Preferred amounts used in case of dry pigments are beween 5% by weight and 25% by weight of the ink composition.

Further solvents (with higher boiling points) can be present in the formulation, for example in amounts of from 0 to 35 % by weight, preferably 10 to 20 % by weight and most preferred 15 % by weight. These further solvents can be selected from Haltermann PKWF 4/7, Haltermann PKWF 4/7AFnew, Haltermann PKWF 4/7AF, Haltermann PKWF 4/7S, Carless Paraset 26L, Carless Paraset 26M or Carless Paraset 26H (boiling range 240 to 270°C, aromatic content 0 to 20%). They are commercially available from Halterman Products, for example Hamburg, Germany.

The boiling point range of the used low boiling solvent is between 200°C to 240°C, preferably between 210°C to 230°C and most preferred between 220°C to 225°C.

The boiling point range of possibly used solvents with higher boiling points is between 230°C to 280°C, preferably between 240°C to 270°C and most preferred between 250°C to 260°C.

The pigment may be any of a variety of conventional organic or inorganic pigments. Suited are, for example, Sunbrite Yellow13 (Yellow), Symuler Carm 6B306 (Magenta), Phtalo Blue 3405 (Cyan), Elftex 225 (Carbon Black). The pigment can be used in dry form but also in form of a paste. This pigment pastes can be Economics Yellow D73-5529, Magenta D19-6958, Magenta FDR H079, Cyan FDB-H010, Cyan FDB-H011, Black Base P25, Black Base P45, Black Base E410, Black Base XPB 145. They are commercially available from Sun Chemical Corporation, Fort Lee.

Binders usable in the ink compositions may comprise the low boiling solvent according to the present invention. The binders contain a resin and may appear within the varnish, which varnishes are also addressed in the present invention. Examples for binders useful within the ink composition of the present invention are Akzo Setaprint P7920, Eastman Krumbhaar K2376, Arizona RL43 and Cray Valley Tergraf ND1710. Examples for binders useful as co-resins are Arizona Sylvaprint RL49, Eastman Krumbhaar K2833 and Cray Valley Tergraf 905.

Low boiling point solvents used within the new ink composition, which solvents can be present within the binder or varnish, can be of vegetable oil origin. Suited are esters or ethers of fatty acids or glycol ethers with a very low boiling range of from 210 to 230°C. Examples for glycol ethers are Dow Chemical Dowanol (R) DPnB (Dipropylene-n-butyl-glycol) and Sasol BDG (Butyldiglycol).

In particular useful solvents for the ink composition or varnish are mineral oils with a very low boiling range of from 210 to 230°C. Suited are, for example, Haltermann PKWF 1/3AF or Exxon Varsol D80 or Exxon Exxsol 80 mineral oil.

The ink composition in accordance with the present invention may comprise appropriate amounts of further additives. They can be selected from wetting agents for the pigment, lanolin (levelling agent), natural or synthetic waxes, polyethylenes or Teflon powders.

The additives can be suited to enhance surface characteristics such as slip, rub resistance, and skin oil resistance. Optionally conventional heat-set vehicles which either may or may not be gel varnishes can be added. Appropriate amounts of added solvent to adjust proper flow, body, tack and stability can be added. Suitable waxes can also include halogenated hydrocarbon waxes or fatty acid amides. Also, petroleum waxes, such as fully refined paraffin wax or microcrystalline waxes can be present in the ink composition according to the invention.

Slip or rub compounds or anti-set-off paste, known to the person skilled in the art, can be present as additives in the ink formulation.

The ink compositions of the present invention may be prepared in any convenient manner, such as for example in a three-roll mill, by a mix and filter process, or the like, in accordance with known ink or pigment dispersion techniques. Furthermore, the inks of this invention may be applied to the substrate in any known and convenient manner. The substrate on which the ink is printed is preferably web paper.

The following examples are suited to illustrate the invention without any restriction to its scope:

### Example 1:

### Varnish "4/7 varnish"

The following varnish according to the invention is named "4/7 varnish".

It comprises Haltermann PKWF 4/7 mineral oil with a low boiling range of from 240 to 270°C (aromatic content 15%). The main resin in the varnish is Akzo Setaprint P7920 which has low viscosity and good compatibility (countertypes are Eastman Krumbhaar K2376, Arizona RL43 and Cray Valley Tergraf ND1710). The co-resin Arizona Sylvaprint RL49 has medium viscosity, medium compatibility and gel reactivity (countertypes are Eastman Krumbhaar K2833 and Cray Valley Tergraf 905). The varnish is gelled with Sasol Dorox D561 to decrease the tack.

The resins are diluted in solvent and additives, heated to 175°C and stirred for 30 min. Then the 4/7 varnish was cooled down to 160°C and the gelling agent (diluted in 4,1 % of the solvent) was added and stirred for further 30 min. After rheology and tack of the varnish was checked the varnish was cooled down to 130°C and discharged.

The following table gives an overview over the ingredients of the varnish:

| "4/7 varnish" | | |
|---|---|---|
| Component | wt. % | Supplier |
| PKWF 4/7 | 30.0 | Haltermann |
| wood oil | 5.0 | Koehn |
| Kodaflex TXIB | 8.5 | Eastman |
| Setaprint P 7920 | 32.0 | Akzo |
| Sylvaprint RL49 | 18.0 | Arizona |
| PKWF 4/7 | 4.1 | Haltermann |
| Dorox D561 | 0.9 | Sasol |
| SA-7554 | 1.5 | Eastman |

### Example 2:

### Varnish "1/3 varnish"

The following varnish according to the invention is named "1/3 varnish".

The "1/3 varnish" comprises Haltermann PKWF 1/3AF mineral oil with a very low boiling range: 210 to 230°C (aromatic content <1%). The main resin in the varnish is Akzo Setaprint P7920 which has a low viscosity and good compatibility (countertypes are Eastman Krumbhaar K2376, Arizona RL43 and Cray Valley Tergraf ND1710). The co-resin Arizona Sylvaprint RL49 has medium viscosity, medium compatibility and gel reactivity (countertypes are Eastman Krumbhaar K2833 and Cray Valley Tergraf 905). The varnish is gelled with Sasol Dorox D561 to decrease the tack.

The resins are diluted in solvent and additives, heated to 160°C and stirred for 30 min. Then the gelling agent (diluted in 3.8% of the solvent) was added and stirred for further 30 min. After rheology and tack of the varnish was checked the varnish was cooled down to 130°C and discharged.

The following table gives an overview over the ingredients of the varnish:

| "1/3 varnish" | | |
|---|---|---|
| Component | wt. % | Supplier |
| PKWF 1/3AF | 30.0 | Haltermann |
| wood oil | 5.0 | Koehn |
| Kodaflex TXIB | 9.4 | Eastman |
| Setaprint P 7920 | 32.4 | Akzo |
| Sylvaprint RL49 | 17.4 | Arizona |
| PKWF 1/3AF | 3.8 | Haltermann |
| Dorox D561 | 0.9 | Sasol |
| SA-7554 | 1.5 | Eastman |

The varnish in accordance with the invention as described in Examples 1 and 2 are suited to prepare non-fluting heatset ink compositions, which compositions are described in the following Examples:

### Example 3:

### Non-fluting heatset ink compostion

Series 1000 ink is based on the "4/7 varnish" and Carless Paraset 26L ink solvent (240-270°C boiling range, aromatic content <1 %). The ink composition was made of dry pigment. A mineral oil solvent with lower boiling range and no fatty components and no plasticizer TXIB were chosen in the ink formulations. A thinner ink film should speed up drying of the inks. For improved rub resistance and good slip of the paper sheets a little amount of wax was used.

| Composition Series 1000 ink: | | | | | | |
|---|---|---|---|---|---|---|
| **Component** | **Yellow** | **Magenta** | **Cyan** | **Black** | **Component** | **Supplier** |
| Sunbrite Yellow13 | 11.0 | - | - | - | Pigment | Sun |
| Symuler Carm 6B306 | - | 18.0 | - | - | Pigment | Sun |
| Phtalo Blue 3405 | - | - | 17.0 | - | Pigment | Sun |
| Elftex 225 | - | - | - | 20.0 | Pigment | Cabot |
| REFLEXBLUE A5H-R | - | - | - | 1.0 | Pigment | Sun |
| 4/7 Varnish | 76.5 | 66.0 | 67.0 | 62.0 | Varnish | Sun |
| Polytset 2400 | 2.0 | 2.0 | 2.0 | 2.0 | PE wax | Sun |
| Paraset 26L | 10.5 | 14.0 | 14.0 | 15.0 | Solvent | Carless |
| **Total (wt. %)** | 100.0 | 100.0 | 100.0 | 100.0 | | |

The components of the ink were mixed in a dissolver at temperatures up to 60°C.

### Example 4:

### Non-fluting heatset ink compostion

Series 2000 is based on the "4/7 varnish" and on the "1/3 varnish". The ink composition was made of dry pigment. A mineral oil solvent with lower boiling range and no fatty components and no plasticizer TXIB were chosen in the ink formulations.

A thinner ink film should speed up drying of the inks. For improved rub resistance and good slip of the paper sheets a little amount of wax was used.

| Composition Series 2000 ink: | | | | | | |
|---|---|---|---|---|---|---|
| **Component** | **Yellow** | **Magenta** | **Cyan** | **Black** | **Component** | **Supplier** |
| Sunbrite Yellow13 | 11.0 | | | | Pigment | Sun |
| Symuler Carm 6B306 | | 18.0 | | | Pigment | Sun |
| Phtalo Blue 3405 | | | 17.0 | | Pigment | Sun |
| Elftex 225 | | | | 20.0 | Pigment | Cabot |
| REFLEXBLUE A5H-R | | | | 1.0 | Pigment | Sun |
| 1/3 Varnish | 42.2 | 32.2 | 30.7 | 26.9 | Varnish | Sun |
| 4/7 Varnish | 33.3 | 32.2 | 36.5 | 34.1 | Varnish | Sun |
| Polytset 2400 | 2.0 | 2.0 | 2.0 | 2.0 | PE wax | Sun |
| PKWF 1/3AF | 11.6 | 15.6 | 13.8 | 16.0 | Solvent | Haltermann |
| **Total** | 100.0 | 100.0 | 100.0 | 100.0 | | |

The components of the ink were mixed in a dissolver at temperatures up to 60°C.

### Example 5:

### Non-fluting heatset ink compostion

Series 3000 ink is based on the "1/3 varnish". The ink composition was made of pigment paste. A mineral oil solvent with lower boiling range and no fatty components and no plasticizer TXIB were chosen in the ink formulations. A thinner ink film should speed up drying of the inks. For improved rub resistance and good slip of the paper sheets a little amount of wax was used.

| Composition Series 3000 ink: | | | | | | |
|---|---|---|---|---|---|---|
| **Component** | **Yellow** | **Magenta** | **Cyan** | **Black** | **Component** | **Supplier** |
| Econ. YellowD73-5529 | 24.5 | - | - | - | Flush | Sun |
| Magenta D19-6958 | - | 35.5 | - | - | Flush | Sun |
| Cyan HVF FDB-H010 | - | - | 17.0 | - | Flush | Sun |
| Black Base P25 | - | - | - | 27.4 | Flush | Cabot |
| Black Base E410 | - | - | - | 14.6 | Flush | Cabot |
| REFLEXBLUE A5H-R | - | - | - | 1.0 | Pigment | Sun |
| 1/3 Varnish | 62.0 | 52.0 | 60.0 | 47.0 | Varnish | Sun |
| Polytset 2400 | 2.0 | 2.0 | 2.0 | 2.0 | PE wax | Sun |
| PKWF 1/3AF | 11.5 | 10.5 | 10.5 | 8.0 | Solvent | Haltermann |
| **Total (wt. %)** | 100.0 | 100.0 | 100.0 | 100.0 | | |

The components of the ink were mixed in a dissolver at temperatures up to 60°C.

### Example 6:

### Non-fluting heatset ink compostion

Series 5000 is based on the "4/7 varnish" and on the "1/3 varnish". The ink composition was made of pigment paste. A mineral oil solvent with lower boiling range and no fatty components and no plasticizer TXIB were chosen in the ink formulations. A thinner ink film should speed up drying of the inks. For improved rub resistance and good slip of the paper sheets a little amount of wax was used.

| Composition Series 5000 ink: | | | | | | |
|---|---|---|---|---|---|---|
| **Component** | **Yellow** | **Magenta** | **Cyan** | **Black** | **Component** | **Supplier** |
| Econ. YellowD73-5529 | 33.0 | - | - | - | Flush | Sun |
| Orange Base | 0.7 | - | - | - | Flush | Sun |
| Magenta D19-6958 | - | 40.0 | - | - | Flush | Sun |
| Cyan HVF FDB-H010 | - | - | 34.0 | - | Flush | Sun |
| Black Base P25 | - | - | - | 28.0 | Flush | Sun |
| Black Base E410 | - | - | - | 13.0 | Flush | Sun |
| REFLEXBLUE A5H-R | - | - | - | 1.0 | Pigment | Sun |
| 1/3 Varnish | 22.0 | 19.5 | 21.0 | 21.0 | Varnish | Sun |
| 4/7 Varnish | 30.0 | 25.5 | 30.0 | 23.0 | Varnish | Sun |
| Polytset 2400 | 2.0 | 2.0 | 2.0 | 1.0 | PE wax | Sun |
| Fluorosperse | 1.0 | 1.0 | 1.0 | 1.0 | PTFE wax | Sun |
| Vaseline | - | - | 3.0 | 3.0 | wax | Sun |
| PKWF 1/3AF | 2.8 | 4.7 | 8.0 | 1.5 | Solvent | Haltermann |
| Paraset 26L | 8.0 | 6.8 | - | 3.0 | Solvent | Carless |
| **Total (wt. %)** | 100.0 | 100.0 | 100.0 | 100.0 | | |

The components of the ink were mixed in a dissolver at temperatures up to 60°C.

### Example 7:

### Printing process without fluting effect

During the printing process UPM Cote 57g/m² or StoraEnso Neopress 60g/m² paper was used. The ink compositions of Examples 3 to 6 were dried at different temperatures. At a printed web temperature of from 120°C 85°C a strong fluting effect was observed. However, the the ink compositions of Examples 3 to 6 dried without any observable fluting at printed web temperatures as low as from 40°C to 53°C.

## Claims

1. A use of at least one solvent having a boiling point of from 200°C to 240°C in an ink composition in an amount greater than 1 % by weight, based on the weight of the final ink composition, for a printing process allowing the ink composition to dry at a printed web temperatures of from 40°C to 60°C in a conventional heatset printing process to avoid fluting by water.

2. The use according to claim 1, wherein the at least one solvent having a boiling point of from 200°C to 240°C is present within the formulation in an amount greater than 5% by weight, based on the weight of the final ink composition.

3. The use according to claim 1 and/or 2, and wherein the at least one solvent having a boiling point of from 200°C to 240°C is present within the formulation in an amount from 10% to 40% by weight, based on the weight of the final ink composition.

4. The use according to one or more of the preceding claims, wherein the solvent with a boiling point of from 200°C to 240°C is present within a varnish.

5. The use according to one or more of the preceding claims, wherein the solvent with a boiling point of from 200°C to 240°C is a mineral oil.

6. The use according to one or more of claims 1 to 4, wherein the solvent with a boiling point of from 200°C to 240°C is of vegetable oil origin.

7. The use according to claim 6, wherein the solvent is based on vegetable esters or ethers of fatty acids or glycol ethers.

8. The use according to one or more of any of the preceding claims, wherein a pigment is present in the form of dry pigment or paste or flush.

9. The use according to one or more of any of the preceding claims, wherein the pigment is selected from one or more of Sunbrite Yellow13 (Yellow), Symuler Carm 6B306 (Magenta), Phtalo Blue 3405 (Cyan) or Elftex 225 (Carbon Black).

10. A use of a non-fluting conventional heatset printing ink composition comprising up to 45 % by weight of a pigment or pigment paste or flush, greater than 40% by weight of a binder, greater than 10% by weight of one or more solvent(s), wherein at least one solvent has a boiling point of from 200°C to 240°C which solvent is present within the formulation in an amount greater than 1 % by weight, based on the weight of the final ink composition, and optionally further additives, which ink composition dries at a printed web temperatures of from 40°C to 60°C during a conventional heatset printing process to avoid fluting by water.

11. A use of a varnish for preparing a non-fluting conventional heatset printing ink composition comprising at least one solvent having a boiling point of from 200°C to 240°C which is present in an amount greater than 1% by weight, based on the weight of the final ink composition, wherein the at least one solvent with a boiling point of from 200°C to 240°C is present within the varnish and the varnish allows a resulting ink composition to dry at printed web temperatures of from 40°C to 60°C during a conventional heatset printing process to avoid fluting by water.

12. The use of a varnish according to claim 11, which is a mineral oil or vegetable oil based varnish.

13. A conventional heatset printing process making use of an ink composition as described in one or more of the preceding claims, **characterised in that** the ink composition dries at a printed web temperature of from 40 °C to 60 C to avoid fluting by water.

14. The heatset printing process according to claim 13 being a heatset web offset printing process.

## Patentansprüche

1. Verwendung mindestens eines Lösemittels mit einem Siedepunkt von 200°C bis 240°C in einer Druckfarbenzusammensetzung in einer Menge von mehr als 1 Gew.-% auf der Basis des Gewichts der endgültigen Druckfarbenzusammensetzung für ein Druckverfahren, wodurch es ermöglicht wird, dass die Druckfarbenzusammensetzung bei Druckrollentemperaturen von 40°C bis 60°C in einem konventionellen Heatset-Druckverfahren unter Vermeidung von Wellenbildung durch Wasser trocknet.

2. Verwendung nach Anspruch 1, wobei das mindestens eine Lösemittel mit einem Siedepunkt von 200°C bis 240°C in der Formulierung in einer Menge von mehr als 5 Gew.% auf der Basis des Gewichts der endgültigen Druckfarbenzusammensetzung vorliegt.

3. Verwendung nach Anspruch 1 und/oder 2, und wobei das mindestens eine Lösemittel mit einem Siedepunkt von 200°C bis 240°C in der Formulierung in einer Menge von 10 bis 40 Gew.-% auf der Basis des Gewichts der endgültigen Druckfarbenzusammensetzung vorliegt.

4. Verwendung nach einem oder mehreren der vorangehenden Ansprüche, wobei das Lösemittel mit einem Siedepunkt von 200°C bis 240°C in einem Firnis vorliegt.

5. Verwendung nach einem oder mehreren der vorangehenden Ansprüche, wobei das Lösemittel mit einem Siedepunkt von 200°C bis 240°C ein Mineralöl ist.

6. Verwendung nach einem oder mehreren der Ansprüche 1 bis 4, wobei das Lösemittel mit einem Siedepunkt von 200°C bis 240°C ein Öl pflanzlichen Ursprungs ist.

7. Verwendung nach Anspruch 6, wobei das Lösemittel auf der Basis von pflanzlichen Estern oder Fettsäureethern oder Glycolethern vorliegt.

8. Verwendung nach einem oder mehreren von beliebigen der vorangehenden Ansprüche, wobei ein Pigment in Form eines Trockenpigments oder einer Paste oder Flushpaste vorliegt.

9. Verwendung nach einem oder mehreren von beliebigen der vorangehenden Ansprüche, wobei das Pigment ausgewählt ist aus einem oder mehreren von Sunbrite Yellow13 (Gelb) Symuler Carm 6B306 (Magenta), Phtalo Blue 3405 (Cyan) oder Elftex 225 (Ruß).

10. Verwendung einer die Wellenbildung vermeidenden konventionellen Heatset-Druckfarbenzusammensetzung, umfassend bis zu 45 Gew.-% eines Pigments oder einer Pigmentpaste oder Flushpaste, mehr als 40 Gew.-% eines Bindemittels, mehr als 10 Gew.% eines oder mehrerer Lösemittel(s), wobei mindestens ein Lösemittel einen Siedepunkt von 200°C bis 240°C aufweist, wobei das Lösemittel in der Formulierung in einer Menge von mehr als 1 Gew.-% auf der Basis des Gewichts der endgültigen Druckfarbenzusammensetzung vorliegt, und wahlweise weitere Zusätze, wobei die Druckfarbenzusammensetzung bei Druckrollentemperaturen von 40°C bis 60°C während eines konventionellen Heatset-Druckverfahrens unter Vermeidung von Wellenbildung durch Wasser trocknet.

11. Verwendung eines Firnisses zur Herstellung einer die Wellenbildung vermeidenden konventionellen Heatset-Druckfarbenzusammensetzung, umfassend mindestens ein Lösemittel mit einem Siedepunkt von 200°C bis 240°C, das in einer Menge von mehr als 1 Gew.-% auf der Basis des Gewichts der endgültigen Druckfarbenzusammensetzung vorliegt, wobei das mindestens eine Lösemittel mit einem Siedepunkt von 200°C bis 240°C in dem Firnis vorliegt und der Firnis es ermöglicht, dass eine daraus erhaltene Druckfarbenzusammensetzung bei Druckrollentemperaturen von 40° bis 60°C während eines konventionellen Heatset-Druckverfahrens unter Vermeidung von Wellenbildung durch Wasser trocknet.

12. Verwendung eines Firnisses nach Anspruch 11, wobei der Firnis auf der Basis von Mineralöl oder Pflanzenöl vorliegt.

13. Konventionelles Heatset-Druckverfahren, das eine wie in einem oder mehreren der vorangehenden Ansprüche beschriebene Druckfarbenzusammensetzung verwendet, **dadurch gekennzeichnet, dass** die Druckfarbenzusammensetzung bei einer Druckrollentemperatur von 40°C bis 60°C unter Vermeidung von Wellenbildung durch Wasser trocknet.

14. Heatset-Druckverfahren nach Anspruch 13, bei welchem es sich um ein Heatset-Rollenoffsetdruckverfahren handelt.

## Revendications

1. Utilisation d'au moins un solvant ayant un point d'ébullition de 200°C à 240°C dans une composition d'encre dans une quantité supérieure à 1 % à poids, sur la base du poids de la composition d'encre finale, pour un procédé d'impression permettant à la composition d'encre de sécher à des températures de bande imprimée de 40°C à 60°C dans un procédé d'impression par thermoséchage pour éviter une ondulation par l'eau.

2. Utilisation selon la revendication 1, dans laquelle le au moins un solvant ayant un point d'ébullition de 200°C à 240°C est présent dans la formulation dans une quantité supérieure à 5 % à poids, sur la base du poids de la composition d'encre finale.

3. Utilisation selon la revendication 1 et/ou 2, et dans laquelle le au moins un solvant ayant un point d'ébullition de 200°C à 240°C est présent dans la formulation dans une quantité de 10 % à 40 % en poids, sur la base du poids de la composition d'encre finale.

4. Utilisation selon l'une ou plusieurs des revendications précédentes, dans laquelle le solvant ayant un point d'ébullition de 200°C à 240°C est présent dans un vernis.

5. Utilisation selon l'une ou plusieurs des revendications précédentes, dans laquelle le solvant ayant un point d'ébullition de 200°C à 240°C est une huile minérale.

6. Utilisation selon l'une ou plusieurs des revendications 1 à 4, dans laquelle le solvant ayant un point d'ébullition de 200°C à 240°C est issu d'huile végétale.

7. Utilisation selon la revendication 6, dans laquelle le solvant est à base d'esters ou éthers végétaux d'acides gras ou d'éthers de glycols.

8. Utilisation selon l'une ou plusieurs des revendications précédentes, dans laquelle un pigment est présent sous la forme d'un pigment sec ou d'une pâte ou d'une prédispersion.

9. Utilisation selon l'une quelconque des revendications précédentes, dans laquelle le pigment est choisi parmi un ou plusieurs parmi le Sunbrite Jaune 13 (Jaune), le Symuler Carm 6B306 (Magenta), le Bleu Phtalo 3405 (Cyan) ou l'Elftex 225 (Noir de Carbone).

10. Utilisation d'une composition d'encre d'impression par thermofixage classique sans ondulation, comprenant jusqu'à 45 % en poids d'un pigment ou d'une pâte pigmentaire ou d'un pigment prédispersé, plus de 40 % en poids d'un liant, plus de 10 % en poids d'un ou plusieurs solvants, au moins un solvant ayant un point d'ébullition de 200°C à 240°C, lequel solvant est présent dans la formulation dans une quantité supérieure à 1 % en poids, sur la base du poids de la composition d'encre finale, et facultativement d'autres additifs, laquelle composition d'encre sèche à des températures de bande imprimée de 40°C à 60°C pendant un procédé d'impression à thermoséchage classique pour éviter une ondulation par l'eau.

11. Utilisation d'un vernis pour préparer une composition d'encre d'impression par thermofixage classique sans ondulation, comprenant au moins un solvant ayant un point d'ébullition de 200°C à 240°C qui est présent dans une quantité supérieure à 1 % en poids, sur la base du poids de la composition d'encre finale, le au moins un solvant ayant un point d'ébullition de 200°C à 240°C étant présent dans le vernis et le vernis permet à une composition d'encre résultante de sécher à des températures de bande imprimée de 40°C à 60°C pendant un procédé d'impression par thermofixage classique pour éviter une ondulation par l'eau.

12. Utilisation d'un vernis selon la revendication 11, qui est un vernis à base d'une huile minérale ou d'une huile végétale.

13. Procédé d'impression par thermofixage classique faisant usage d'une composition d'encre telle que décrite dans une ou plusieurs des revendications précédentes, **caractérisé par le fait que** la composition d'encre sèche à une température de bande imprimée de 40°C à 60°C pour éviter une ondulation par l'eau.

14. Procédé d'impression par thermofixage selon la revendication 13, qui est un procédé d'impression offset à l'aide d'une presse offset à bobines et sécheurs.
